# EUROPÄISCHE PATENTSCHRIFT

(11) **EP 1 945 683 B1**
(45) Veröffentlichungstag und Bekanntmachung des Hinweises auf die Patenterteilung: **03.03.2010**
(21) Anmeldenummer: 06807519.1
(22) Anmeldetag: 25.10.2006
(51) Int. Cl.: C08F 26/02, C08F 290/14, D21H 17/34

(54) **WÄSSRIGE DISPERSIONEN WASSERLÖSLICHER POLYMERE MIT KAMMARTIGEN STABILISATOREN**
AQUEOUS DISPERSIONS OF WATER-SOLUBLE POLYMERS WITH COMBLIKE STABILIZERS
DISPERSIONS AQUEUSES DE POLYMERES HYDROSOLUBLES COMPRENANT DES STABILISANTS DE TYPE PEIGNE

(30) Priorität: 03.11.2005 DE 102005052924
(43) Veröffentlichungstag der Anmeldung: 23.07.2008
(73) Patentinhaber: BASF SE, 67056 Ludwigshafen (DE)
(72) Erfinder: WESTER, Bettina, 68163 Mannheim (DE); BRAIG, Volker, 69469 Weinheim-Lützelsachsen (DE); GAUWEILER, Werner, 67363 Lustadt (DE); LEDUC, Marc, 68163 Mannheim (DE); BECKER, Stefan, 68167 Mannheim (DE); FEUERHAKE, Robert, 68163 Mannheim (DE)
(86) Internationale Anmeldenummer: PCT/EP2006/067736
(87) Internationale Veröffentlichungsnummer: WO 2007/051736

(56) Entgegenhaltungen:
- WO-A-00/27893
- WO-A-03/046024
- WO-A2-2004/029110

## Beschreibung

Die Erfindung betrifft wässrige Dispersionen wasserlöslicher Polymere von N-Vinylcarbonsäureamiden, welche im Wesentlichen salzfrei sind und anionische polymere Stabilisatoren mit kammartiger Molekülstruktur enthalten, Verfahren zur Herstellung der Dispersionen in Gegenwart von anionischen polymeren Stabilisatoren mit kammartiger Molekülstruktur und die Verwendung der Dispersionen als Retentions- oder Fixiermittel bei der Papierherstellung.

Weitere Ausführungsformen der vorliegenden Erfindung sind den Ansprüchen, der Beschreibung und den Beispiele zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Wasserlösliche Polymere werden in der Regel in Form wässriger Lösungen eingesetzt. Ihre Bereitstellung als wässrige Lösung wird jedoch dadurch erschwert, dass bereits 0.5 - 1 %ige Lösungen sehr hohe Viskositäten zeigen können, wodurch z. B. Transport, Dosierung und ganz allgemein die Handhabung solcher Lösungen erschwert werden. Die Formulierung wasserlöslicher Polymere als Wasser-in-Öl (W/O) Dispersion erlaubt deutlich höhere Polymergehalte, allerdings ist die Anwesenheit eines organischen Lösungsmittels für viele Anwendungen nicht vorteilhaft. Auch die Bereitstellung wasserlöslicher Polymere in fester Form, z. B. als Pulver, ist problematisch, da das Material vor der Anwendung zuerst in Wasser gelöst werden muss, was sehr lange dauern kann und oft unvollständig ist.

Die Bereitstellung höherkonzentrierter wässriger Lösungen von wasserlöslichen Polymeren gelingt durch den Einsatz von geeigneten Hilfsstoffen. Diese Hilfsstoffe führen in solchen wässrigen Lösungen zu einer teilweisen Trennung der eigentlich wasserlöslichen Polymerphase und der wässrigen Phase. Das Polymer wird durch sogenannte Verdränger (oder Fällungsmittel) aus der wässrigen Phase verdrängt und die sich bildenden feinverteilten Polymerteilchen in der Regel durch sogenannte Stabilisatoren (oder Dispergiermittel) stabilisiert. Obwohl der Polymergehalt solcher Dispersionen bei 25 % liegen kann, trägt das in Form einer eigenen, fein verteilten Phase vorliegende Polymer nicht wesentlich zur Viskosität der Dispersion bei.

DE 198 51 024 offenbart salzfreie wässrige Dispersionen von N-Vinylcarbonsäureamiden mit z. B. Polyethylenglykol und Polyvinylpyrrolidon als polymere Hilfsmittel, welche relativ hohe Viskositäten zeigen. Die Dispersionen bleiben auch nach Hydrolyse mit Mineralsäuren stabil.

Aus dem Stand der Technik bekannt sind polymere Stabilisatoren mit kammartiger Molekülstruktur. Diese sind entweder durch eine Pfropfcopolymerisation erhältlich oder durch die Copolymerisation von Makromonomeren.

Beispielsweise werden in WO 03/046024 wässrige Polyvinylformamid-Dispersionen beschrieben, welche mit Pfropfcopolymeren stabilisiert sind, bei denen auf ein Polyalkylenglykol-Hauptkette als Rückgrat Seitenketten aus Verbindungen mit mindestens zwei ethylenisch ungesättigten Doppelbindungen radikalisch aufgepfropft wurden. WO 2004/029110 offenbart salzfreie Polyvinylformamid-Dispersionen, welche Pfropfcopolymere als Stabilisatoren enthalten, die durch Pfropfung von N-Vinylcarbonsäureamiden auf Polyalkylenglykole oder Polytetrahydrofurane als Rückgrat erhältlich sind. In diesen Fällen ist also eine relativ unpolare Polyalkylenglykol-Hauptkette mit relativ polaren Seitenketten ausgestattet worden.

Im Gegensatz dazu erhält man durch Homo- oder Copolymerisation von Makromonomere enthaltenden Monomermischungen polymere Stabilisatoren mit umgekehrter Verteilung der Polaritäten. WO 02/38639 offenbart beispielsweise kationische Stabilisatoren für die Polymerisation kationischer und nichtionischer Vinylmonomere, welche eine kammartige Molekülstruktur aufweisen und die durch Copolymerisation eines kationischen Vinylmonomeren mit Polyalkylenglykolmonoallyethern erhältlich sind. Die Dispersionsherstellung erfolgt in salzhaltiger Lösung und die zu polymerisierenden Vinylmonomere müssen im Verlauf der Reaktion kontinuierlich nachdosiert werden, um eine homogene Reaktionsphase zu gewährleisten.

In US 2003/0212183 wird ein Verfahren zur Herstellung wässriger salzhaltiger Polymerdispersionen aus nichtionischen Acrylamiden und kationischen Acrylsäure- und Acrylamidmonomeren beschrieben, wobei als Stabilisatoren Copolymere aus kationischen Vinylmonomeren und nichtionischen Monomeren, z. B. Acrylate von Polyethylenglykolmonomethylethern, Verwendung finden.

WO 03/097703 offenbart wässrige Polymerdispersionen aus wasserlöslichen kationischen und nichtionischen Monomeren, wobei als Stabilisatoren Copolymere aus kationischen Monomeren und Monoallyl- oder Monovinylpolyethern und außerdem Co-Stabilisatoren verwendet werden.

Es war eine Aufgabe der Erfindung, wässrige Dispersionen von wasserlöslichen Polymeren enthaltend N-Vinylcärbonsäureamid-Einheiten bereitzustellen, welche eine niedrige Viskosität aufweisen, praktisch salzfrei sind und die sich aus homogener Phase bilden, ohne dass ein Teil der Monomere während der Reaktion kontinuierlich zudosiert werden muss.

Die Aufgabe wird erfindungsgemäß gelöst mit wässrigen Dispersionen wasserlöslicher Polymere von N-Vinylcarbonsäureamiden, wenn die Dispersionen als Stabilisator mindestens ein anionisches wasserlösliches Polymer mit kammartiger Molekülstruktur enthält, welches durch Copolymerisation einer Monomermischung, die Makromonomere enthält, erhältlich sind.
Die Anteile an wasserlöslichem Polymer von N-Vinylcarbonsäureamiden und anionischem Stabilisator können in den erfindungsgemäßen Dispersionen in weiten Bereichen variieren. 100 Gewichtsteile der erfindungsgemäßen Dispersion enthalten beispielsweise (i) 5 bis 50 Gewichtsteile wasserlösliche Polymere von N-Vinylcarbonsäureamiden und (ii) 1 bis 30 Gewichtsteile mindestens eines anionischen Stabilisators mit kammartiger Molekülstruktur sowie 94 bis 20 Gewichtsteile Wasser.

Erfindungsgemäß werden unter wasserlöslichen Polymeren von N-Vinylcarbonsäureamiden Homo- und Copolymere verstanden, die Einheiten der Formel 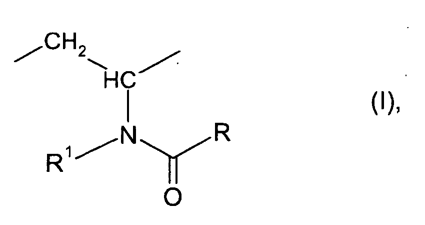 einpolymerisiert enthalten, in der R, R¹ = H oder CH₃ bedeuten. Die Polymere werden durch Homo- oder Copolymerisation von z.B. N-Vinylformamid, N-Vinylacetamid, N-Alkyl-N-vinylformamid oder N-Alkyl-N-vinylacetamid hergestellt. Von den N-Vinylcarbonsäureamiden wird N-Vinylformamid bevorzugt eingesetzt, besonders bevorzugt sind Homopolymere des N-Vinylformamids.

Unter "wasserlöslichen Polymeren" wird dabei erfindungsgemäß verstanden, dass sich bei Raumtemperatur im Allgemeinen mindestens 0.01 Gew.-% des Polymeren in Wasser lösen und bis zu einer Konzentration von 90 Gew.-% in Wasser eine klare einphasige Lösung ohne Trübung bilden.

Erfindungsgemäß können die wasserlöslichen Polymere von N-Vinylcarbonsäureamiden neben 100 bis 20 Gew.-% der N-Vinylcarbonsäureamide gegebenenfalls noch 0 bis 80, vorzugsweise 5 bis 30 Gew.-% an Comonomeren einpolymerisiert enthalten, jeweils bezogen auf die Gesamtzusammensetzung der Polymere. Beispielsweise enthalten die wasserlöslichen Polymere 40 - 80 Gew.-%, bevorzugt 50 - 70 Gew.-% und besonders bevorzugt 55 - 65 Gew.-% der N-Vinylcarbonsäureamide, sowie 20 - 60 Gew.-%, bevorzugt 30 - 50 Gew.-% und besonders bevorzugt 35 - 45 Gew.-% an Comonomeren einpolymerisiert. Die Comonomere sind beispielsweise monoethylenisch ungesättigte Carbonsäuren mit 3 bis 8 C-Atomen wie Acrylsäure, Methacrylsäure, Dimethacrylsäure, Ethacrylsäure, Maleinsäure, Citraconsäure, Methylenmalonsäure, Allylessigsäure, Vinylessigsäure, Crotonsäure, Fumarsäure, Mesaconsäure und Itaconsäure. Aus dieser Gruppe von Monomeren verwendet man vorzugsweise Acrylsäure, Methacrylsäure, Maleinsäure oder Mischungen der genannten Carbonsäuren. Die monoethylenisch ungesättigten Carbonsäuren werden entweder in Form der freien Säuren oder in Form ihrer Alkalimetall-, Erdalkalimetall- oder Ammoniumsalze bei der Copolymerisation eingesetzt. Sie können aber auch als Salze aus der jeweiligen Säure und Triethylamin, Ethanolamin, Diethanolamin, Triethanolamin, Morpholin, Diethylentriamin oder Tetraethylenpentamin eingesetzt werden.

Weitere geeignete Comonomere sind beispielsweise die Ester, Amide und Nitrile der obenangegebenen Carbonsäuren, z.B. Acrylsäuremethylester, Acrylsäureethylester, Methacrylsäuremethylester, Methacrylsäurethylester, Hydroethylacrylat, Hydroxypropylacrylat, Hydroxybutylacrylat, Hydroxyethylmethacrylat, Hydroxypropylmethacrylat, Hydroxyisobutylacrylat, Hydroxyisobutylmethacrylat, Maleinsäuremonomethylester, Maleinsäuredimethylester, Maleinsäuremonoethyslester, Maleinsäurediethylester, 2-Ethylhexylacrylat, 2-Ethylhexylmethacrylat, Acrylamid, Methacrylamid, N-Dimethylacrylamid, N-tert.-Butylacrylamid, Acrylnitril, Methacrylnitril, Dimethylaminoethylacrylat, Diethylaminoethylacrylat, Diethylaminoethylmethacrylat sowie die Salze der zuletzt genannten basischen Monomeren mit Carbonsäuren oder Mineralsäuren sowie die quaternierten Produkte der basischen (Meth)acrylate. Bevorzugt werden Acrylamid oder Methacrylamid eingesetzt.

Außerdem eignen sich als weitere einpolymerisierbare Comonomere Acrylamidoglykolsäure, Vinylsulfonsäure, Allylsulfonsäure, Methallylsulfonsäure, Styrolsulfonsäure, Acrylsäure-(3-sulfopropyl)ester, Methacrylsäure-(3-sulfopropyl)ester oder Acrylamidomethylpropansulfonsäure sowie Phosphonsäuregruppen enthaltende Monomere wie Vinylphosphonsäure, Allylphosphonsäure oder Acrylamidomethanpropanphosphonsäure. Die Säuregruppen enthaltenden Monomeren können in Form der freien Säuregruppen sowie in partiell oder in vollständig mit Basen neutralisierter Form bei der Polymerisation eingesetzt werden.

Weitere geeignete copolymerisierbare Verbindungen sind N-Vinylpyrrolidon, N-Vinylcaprolactam, N-Vinylimidazol, N-Vinyl-2-methylimidazol, N-Vinyl-4-methylimidazol, Vinylacetat, Vinylpropionat oder Styrol sowie Verbindungen mit mehr als einer polymerisierbaren Doppelbindung wie beispielsweise Diallylammoniumchlorid, Ethylenglykoldimethacrylat, Diethylenglykoldiacrylat, Allylmethacrylat, Trimethylolpropantriacrylat, Triallylamin, Tetraallyloxyethan, Triallylcyanurat, Maleinsäurediallylester, Tetraallylethylendiamin, Divinylidenharnstoff, Pentaerythritdi-, Pentaerythrittri- und Pentaerythrittetraallylether, N,N'-Methylenbisacrylamid oder N,N'-Methylenbismethacrylamid.
In einer bevorzugten Ausführungsform enthalten die wasserlöslichen Polymere 40 - 80 Gew.-%, bevorzugt 50 - 70 Gew.-% und besonders bevorzugt 55 - 65 Gew.-% N-Vinylformamid, sowie 20 - 60 Gew.-%, bevorzugt 30 - 50 Gew.-% und besonders bevorzugt 35 - 45 Gew.-% an N-Vinylpyrrolidon einpolymerisiert.

Es ist selbstverständlich auch möglich, Mischungen der genannten Comonomere einzusetzen. Beispielsweise eignen sich zur Herstellung der erfindungsgemäßen wasserlöslichen Polymere aus N-Vinylcarbonsäureamiden Mischungen aus 50 bis 100 Gew.-% N-Vinylformamid und 0 bis 50 Gew.% eines oder mehrerer der genannten Comonomere.

Sofern die genannten Comonomeren bei alleiniger Polymerisation keine wasserlöslichen Polymere ergeben, enthalten die N-Vinylcarbonsäureamid-Einheiten enthaltenden Polymere diese Comonomere nur in solchen Mengen einpolymerisiert, dass die Copolymere noch wasserlöslich sind.

Im Gegensatz zu Wasser-in-Öl-Polymeremulsionen sind für die erfindungsgemäßen wässrigen Dispersionen keine organischen Lösemittel erforderlich. Wie aus dem Stand der Technik hervorgeht, sind konzentrierte Lösungen anorganischer Salze ein übliches Mittel, um wässrige Dispersionen von wasserlöslichen Polymeren herzustellen. Dadurch enthalten die bekannten Dispersionen eine sehr hohe Salzfracht. Die erfindungsgemäßen wässrigen Dispersionen von wasserlöslichen Polymeren sind demgegenüber im Wesentlichen salzfrei. "Im Wesentlichen salzfrei" bedeutet hierbei, dass die in den Dispersionen eventuell noch vorhandene Menge an anorganischen Salzen sehr gering ist, bevorzugt in Summe kleiner als etwa 1 Gew.-%, besonders bevorzugt kleiner als 0.5 Gew.-% und ganz besonders bevorzugt kleiner als 0.3 Gew.-% ist, jeweils bezogen auf das Gesamtgewicht der wässrigen Dispersion.

Die erfindungsgemäßen wässrigen Dispersionen wasserlöslicher Polymere von N-Vinylcarbonsäureamiden haben vorzugsweise einen hohen Polymergehalt und enthalten vorzugsweise Polymere mit hohen Molmassen bei gleichzeitig geringer Viskosität. Die Molmassen M_{w} der N-Vinylcarbonsäureamid-Einheiten enthaltenden Polymere betragen beispielsweise 5 x 10⁴ bis 5 x 10⁷, vorzugsweise 2 x 10⁵ bis 5 x 10⁶ (jeweils Zahlenmittel).

Die erfindungsgemäßen wässrigen Dispersionen enthalten mindestens einen bevorzugt wasserlöslichen polymeren Stabilisator mit kammartiger Molekülstruktur, den man durch Copolymerisation von Makromonomere enthaltenden Monomermischungen erhält und der unter den Polymerisationsbedingungen als Anion vorliegt. Die Struktur der erfindungsgemäßen Stabilisatoren kann beispielsweise beschrieben werden als ein Kohlenwasserstoff-Rückgrat mit anionischen Gruppen und unpolaren Polyalkylenglykol-Seitenketten. Diese Stabilisatoren wirken im wässrigen Polymerisationsmedium beispielsweise als Stabilisator und/oder als Fällungsmittel für die entstehenden Polymerteilchen. Sie werden im folgenden Text als Stabilisatoren bezeichnet.

Unter Makromonomeren werden erfindungsgemäß Substanzen verstanden, welche bei einem Molekulargewicht von bevorzugt kleiner 500 000 D, insbesondere im Bereich von 300 bis 100 000 D, besonders bevorzugt im Bereich von 500 bis 20 000 D, ganz besonders bevorzugt im Bereich von 800 bis 15000 D, eine im Wesentlichen lineare Molekülstruktur aufweisen und einseitig endständig eine polymerisierbare Gruppe tragen.

In einer bevorzugten Ausführungsform der Erfindung werden Makromonomere auf Basis von Polyalkylenglykolen verwendet, welche einseitig endständig mit einer polymerisierbaren Gruppe versehen sind. Dabei kann es sich beispielsweise um eine Vinyl-, Allyl-, (Meth)acrylsäure- oder -amid-Gruppe handeln, wobei die entsprechenden Makromonomere durch folgende Formeln beschrieben werden:

CH₂=CR²-P, (II)

CH₂=CH-CH₂-P, (III)

CH₂=CH-CH₂-NH-R³-P, (IV)

CH₂=CH-CH₂-CO-P, (V)

CH₂=CR²-CO-P, (VI)

CH₂=CR²-CO-NH-R³-P, (VII)

CH₂=CR²-CO-O-R³-P, (VIII)

wobei
R² = H oder Methyl bedeuten,
R³ wie nachfolgend definiert ist und
P ein Polyalkylenglykol-Rest der allgemeinen Formel

P = -{-O-(R³O)ᵤ-R⁴O)ᵥ-(R⁵O)_{w}-[-A-(R⁶O)ₓ-(R⁷O)_{y}-(R⁸O)_{z}-]ₛ-R⁹}ₙ

darstellt, in der die Variablen unabhängig voneinander folgende Bedeutung haben:
- R⁹: Wasserstoff, NH₂, C₁-C₂₄-Alkyl, R¹⁰-C(=O)-, R¹⁰-NH-C(=O)-;
- R³ bis R⁸: -(CH₂)₂-, -(CH₂)₃-, -(CH₂)₄-, -CH₂-CH(CH₃)-, -CH₂-CH(CH₂-CH₃)-, -CH₂- CHOR¹¹-CH₂-;
- R¹⁰: C₁-C₂₄-Alkyl;
- R¹¹: Wasserstoff, C₁-C₂₄-Alkyl, R¹⁰-C(=O)-;
- A: -C(=O)-O-, -C(=O)-B-C(=O)-O-, -C(=O)-NH-B-NH-C(=O)-O-;
- B: -(CH₂)ₜ-, Arylen, gegebenenfalls substituiert;
- n: 1 bis 8;
- s: 0 bis 500, bevorzugt 0 bis 20;
- t: 1 bis 12;
- u: 1 bis 5000, bevorzugt 1 bis 1000, besonders bevorzugt 1 bis 100;
- v: 0 bis 5000, bevorzugt 0 bis 1000;
- w: 0 bis 5000, bevorzugt 0 bis 1000;
- x: 1 bis 5000, bevorzugt 1 bis 1000;
- y: 0 bis 5000, bevorzugt 0 bis 1000;
- z: 0 bis 5000, bevorzugt 0 bis 1000.

Bevorzugt eignen sich solche Verbindungen, bei denen der Polyalkylenglykol-Rest P von einem Polyalkylenglykol abgeleitet ist, welches unter Verwendung von Ethylenoxid, Propylenoxid und Butylenoxid sowie Polytetrahydrofuran hergestellt worden ist. Je nach Art der hierbei verwendeten Monomerbausteine ergeben sich Polyalkylenglykol-Rest P mit folgenden Struktureinheiten.
-(CH₂)₂-O-, -(CH₂)₃-O-, -(CH₂)₄-O-, -CH₂-CH(CH₃)-O-, -CH₂-CH(CH₂-CH₃)-O-, - CH₂-CHOR¹¹-CH₂-O-;

Die endständige primäre Hydroxylgruppe des Polyalkylenglykol-Radikals P (R⁹ = H) kann entweder frei vorliegen oder mit Alkoholen einer Kettenlänge von C₁-C₂₄ bzw. mit Carbonsäuren einer Kettenlänge von C₁-C₂₄ verethert bzw. verestert sein. Sie können jedoch auch durch reduktive Aminierung mit Wasserstoff-Ammoniak-Gemischen unter Druck gegen primäre Aminogruppen ausgetauscht oder durch Cyanethylierung mit Acrylinitril und Hydrieren in Aminopropylendgruppen umgewandelt sein.

Als Alkylreste R⁹ bis R¹¹ seien verzweigte oder unverzweigte C₁-C₂₄-Alkylketten, bevorzugt Methyl, Ethyl, n-Propyl, 1-Methylethyl, n-Butyl, 1-Methylpropyl-, 2-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, 2-Ethylhexyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl oder n-Eicosyl genannt.

Als bevorzugte Vertreter der oben genannten Alkylreste seien verzweigte oder unverzweigte C₁-C₁₂-, besonders bevorzugt C₁-C₆-Alkylketten genannt.

Die Stabilisatoren enthalten in der Regel neben etwa 90 bis 10 Gew.-% an den beschriebenen Makromonomeren auch etwa 10 bis 90, vorzugsweise 25 bis 70 Gew.-% Comonomere einpolymerisiert, welche deprotonierbare Gruppen tragen, die unter den Polymerisationsbedingungen in anionischer Form vorliegen können. Comonomere können beispielsweise monoethylenisch ungesättigte Carbonsäuren mit 3 bis 8 C-Atomen wie Acrylsäure, Methacrylsäure, Dimethacrylsäure, Ethacrylsäure, Maleinsäure, Citraconsäure, Methylenmalonsäure, Allylessigsäure, Vinylessigsäure, Crotonsäure, Fumarsäure, Mesaconsäure und Itaconsäure sein. Aus dieser Gruppe von Comonomeren verwendet man vorzugsweise Acrylsäure, Methacrylsäure, Maleinsäure oder Mischungen der genannten Carbonsäuren. Die monoethylenisch ungesättigten Carbonsäuren werden entweder in Form der freien Säuren oder in Form ihrer Alkalimetall-, Erdalkalimetall- oder Ammoniumsalze bei der Copolymerisation eingesetzt. Sie können aber auch als Salze aus der jeweiligen Säure und Triethylamin, Ethanolamin, Diethanolamin, Triethanolamin, Morpholin, Diethylentriamin oder Tetraethylenpentamin eingesetzt werden.

Weitere geeignete Comonomere sind beispielsweise die Ester, Amide und Nitrile der oben angegebenen Carbonsäuren, z.B. Acrylsäuremethylester, Acrylsäureethylester, Methacrylsäuremethylester, Methacrylsäurethylester, Hydroethylacrylat, Hydroxypropylacrylat, Hydroxybutylacrylat, Hydroxyethylmethacrylat, Hydroxypropylmethacrylat, Hydroxyisobutylacrylat, Hydroxyisobutylmethacrylat, Maleinsäuremonomethylester, Maleinsäuredimethylester, Maleinsäuremonoethyslester, Maleinsäurediethylester, 2-Ethylhexylacrylat, 2-Ethylhexylmethacrylat, Acrylamid, Methacrylamid, N-Dimethylacrylamid, N-tert.-Butylacrylamid, Acrylnitril oder Methacrylnitril, welche nach ihrer Einpolymerisierung in die polymeren Stabilisatoren zu den entsprechenden freien Carbonsäuren hydrolysiert werden können.

Es ist selbstverständlich auch möglich, Mischungen der genannten Comonomeren einzusetzen. Dabei können die Monomere in den Copolymeren statistisch verteilt sein oder als sogenannte Blockpolymere vorliegen.

Sofern die genannten Comonomere bei alleiniger Polymerisation keine wasserlöslichen Polymere ergeben, enthalten die Makromonomere enthaltenden Stabilisatoren diese Comonomere nur in solchen Mengen einpolymerisiert, dass die Stabilisatoren noch wasserlöslich sind.

Für die Herstellung der Stabilisatoren unterwirft man die beschriebenen Makromonomere zusammen mit einem oder mehreren der genannten Comonomere bevorzugt einer radikalisch initiierten Polymerisation in wässrigem Medium. Dabei verwendet man vorzugsweise Polymerisationsinitiatoren, die unter den Polymerisationsbedingungen Radikale bilden. Geeignete Verbindungen dieser Art sind beispielsweise Wasserstoffperoxid, Peroxodisulfate, Peroxide, Hydroperoxide, Redoxkatalysatoren und nicht oxidierend wirkende Initiatoren wie Azoverbindungen, die unter den Polymerisationsbedingungen in Radikale zerfallen. Geeignete Azoverbindungen sind beispielsweise 2,2'-Azo-bis(2-amidionopropan)dihydrochlorid, 2,2'-Azo-bis(N,N'-dimethylenisobutyramidin)dihydrochlorid, 2,2'-Azo-bis(2,4-dimethylvaleronitril), 2,2'-Azo-bis[2-methyl-N-(2-hydroxyethyl)-propionamid] oder 2,2'-Azo-bis-isobutyronitril. Es ist selbstverständlich auch möglich, Mischungen verschiedener Initiatoren einzusetzen. Bevorzugt werden Azoverbindungen verwendet.

Zur Steuerung des Molekulargewichts der sich bildenden Stabilisatoren kann man die Polymerisation in Gegenwart von Polymerisationsreglern durchführen. Geeignete Polymerisationsregler sind beispielsweise Schwefel in gebundener Form enthaltende Verbindungen wie Dodecylmercaptan, Thioglykolsäure, Thioessigsäure und Mercaptoalkohole wie Mercaptoethanol, Mercaptopropanole und Mercaptobutanole. Daneben kann man als Polymerisationsregler auch anorganische Salze wie Hypophosphite oder Bisulfite, beispielsweise Natriumhypophosphit oder Natriumbisulfit, Ameisensäure, Isopropanol oder Hydrazin in Form von Salzen starker Säuren verwenden.

Die erhaltenen wässrigen Stabilisatorlösungen sollten in der Regel vor ihrer weiteren Verwendung von anorganischen Salzen befreit werden. Die Entfernung anorganischer Salze aus den Stabilisatorlösungen ist vorzugsweise dann angezeigt, wenn ihre Verwendbarkeit durch diese Salze ungünstig beeinflusst würde oder wenn bei ihrem Einsatz zur Herstellung der erfindungsgemäßen Dispersionen das Merkmal "im Wesentlichen salzfrei" nicht erfüllt werden könnte. Insbesondere bei Verwendung anorganischer Salze als Polymerisationsregler (wie Natriumhypophosphit oder Natriumbisulfit) bei der Stabilisatorherstellung sollten diese vor einem Einsatz für weitere Polymerisationen entfernt werden.

Die Entsalzung kann beispielsweise durch gängige osmotische Verfahren wie Dialyse oder Ultrafiltration erfolgen, welche dem Fachmann geläufig sind. Hierbei werden in der Regel halbdurchlässige Membranen oder poröse Filterkörper verwendet, welche aufgrund ihrer Porengröße für niedermolekulare Ionen anorganischer Salze durchlässig sind, nicht aber für höhermolekulare Verbindungen wie beispielsweise die erfindungsgemäßen Stabilisatoren.

Daneben kann eine Entsalzung in der Regel auch durch Methoden erfolgen, welche eine präparative Trennung nach Molmassen erlauben, wie beispielsweise durch Größenausschlusschromatographie, Ultrazentrifugierung, Feldflussfraktionierung (Field Flow Fractionation, FFF) oder durch hydrodynamische Fraktionierung (Hydrodynamic Fractionation, HDF).

Weiterhin können anorganische Salze auch durch Fällung abgetrennt werden, wobei sowohl die Salze als auch die Polymere selektiv ausgefällt und beispielsweise durch Abfiltrieren oder Dekantieren voneinander getrennt werden können. Die eigentliche Fällung kann beispielsweise durch Zugabe von Fällungsreagentien ausgelöst werden, die z. B. die gelösten anorganischen Salze in unlöslich Produkte überführt. Außerdem können Fällungen auch durch Zugabe bzw. Wechsel des Lösungsmittels und/oder durch Temperaturänderungen induziert werden.

Darüber hinaus können Entsalzungen auch unter Einsatz von Ionenaustauschern durchgeführt werden. Entsprechende Verfahren sind dem Fachmann an sich bekannt.

Gegenstand der Erfindung ist außerdem ein Verfahren zur Herstellung im Wesentlichen salzfreier wässriger Dispersionen wasserlöslicher Polymere von N-Vinylcarbonsäureamiden durch radikalisch initiierte Polymerisation in wässrigem Medium in Gegenwart von mindestens einem anionischen polymeren Stabilisator mit kammartiger Molekülstruktur und gegebenenfalls weiteren polymeren Hilfsstoffen, wobei man die Stabilisatoren durch Copolymerisation von Makromonomeren und weiteren Comonomeren erhält.

In einer bevorzugten Ausführungsform des Verfahrens polymerisiert man mindestens ein N-Vinylcarbonsäureamid gegebenenfalls zusammen mit anderen Comonomeren in wässrigem Medium in Gegenwart von mindestens einem anionischen polymeren Stabilisator mit kammartiger Molekülstruktur und gegebenenfalls weiteren polymeren Hilfsstoffen, wobei man den oder die Stabilisatoren durch Copolymerisation von Makromonomeren und weiteren Comonomeren als wässrige Lösung mit einem Feststoffgehalt von 1 bis 60 Gew.-%, bevorzugt 20 bis 50 Gew.-%, erhalten hat, bei Temperaturen von 30 bis 100°C unter Verwendung von 0.001 bis 5 Gew.-% (bezogen auf die eingesetzten Monomere) eines Initiators, der unter den Polymerisationsbedingungen Radikale bildet bei einem pH-Wert im Bereich von 4 bis 8, bevorzugt 5.5 bis 7.

Als weitere polymere Hilfsstoffe kommen beispielsweise solche Substanzen in Betracht, welche in der Lage sind, die gebildeten wasserlöslichen Polymere von N-Vinylcarbonsäureamiden aus der wässrigen Phase zu verdrängen. Hierzu kommen insbesondere Verbindungen wie Polyethylenglykol, Polypropylenglykol, Copolymerisate aus Ethylenglykol und Propylenglykol, Polyvinylacetat, Polyvinylalkohol, Polyvinylpyridin, Polyvinylimidazol, Polyvinylsuccinimid, Polydiallyldimethylammoniumchlorid, Polyethylenimin und deren Mischungen in Betracht. Die Molmassen dieser polymeren Hilfsstoffe betragen vorzugsweise 1000 bis 100000 D. Sie können in den erfindungsgemäßen Dispersionen in Mengen von 1 bis 40 Gew.-% enthalten sein.

Die erfindungsgemäß sowohl zur Herstellung der wasserlöslichen Polymere von N-Vinylcarbonsäureamiden als auch der polymeren Stabilisatoren eingesetzten Monomere werden bevorzugt radikalisch polymerisiert, d.h. man verwendet Polymerisationsinitiatoren, die unter den Polymerisationsbedingungen Radikale bilden. Geeignete Verbindungen dieser Art sind beispielsweise Wasserstoffperoxid, Peroxodisulfate, Peroxide, Hydroperoxide, Redoxkatalysatoren und nicht oxidierend wirkende Initiatoren wie Azoverbindungen, die unter den Polymerisationsbedingungen in Radikale zerfallen. Geeignete Azoverbindungen sind beispielsweise 2,2'-Azo-bis(2-amidionopropan)dihydrochlorid, 2,2'-Azo-bis(N,N'-dimethylenisobutyramidin)dihydrochlorid, 2,2'-Azo-bis(2,4-dimethylvaleronitril), 2,2'-Azo-bis[2-methyl-N-(2-hydroxyethyl)-propionamid] oder 2,2'-Azo-bis-isobutyronitril. Es ist selbstverständlich auch möglich, Mischungen verschiedener Initiatoren einzusetzen. Bevorzugt werden Azoverbindungen verwendet.

Falls Dispersionen der wasserlöslichen Polymere von N-Vinylcarbonsäureamiden mit niedrigen Molekulargewichten gewünscht werden, kann man beispielsweise die Initiatormengen, die bei der Polymerisation üblicherweise eingesetzt werden, erhöhen, so dass man auch Initiatormengen einsetzen kann, die außerhalb des oben angegebenen Bereichs für die Initiatormengen liegen. Wässrige Dispersionen von niedrigmolekularen Homo- und Copolymerisaten der in Betracht kommenden N-Vinylcarbonsäureamide können auch dadurch erhalten werden, dass man die Polymerisation in Gegenwart von Polymerisationsreglern durchführt und gegebenenfalls gleichzeitig eine höhere Menge als üblicherweise erforderlich an Initiatoren einsetzt. Geeignete Polymerisationsregler sind beispielsweise Schwefel in gebundener Form enthaltende Verbindungen wie Dodecylmercaptan, Thioglykolsäure, Thioessigsäure und Mercaptoalkohole wie Mercaptoethanol, Mercaptopropanole und Mercaptobutanole. Daneben kann man als Polymerisationsregler auch Hypophosphite oder Bisulfite, beispielsweise Natriumhypophosphit oder Natriumbisulfit, Ameisensäure, Isopropanol oder Hydrazin in Form von Salzen starker Säuren verwenden.

Falls Dispersionen der wasserlöslichen Polymere von N-Vinylcarbonsäureamiden mit hohen Molekulargewichten gewünscht werden, kann man andererseits auch die Initiatormengen, die bei der Polymerisation üblicherweise eingesetzt werden, verringern, so dass man auch hier Initiatormengen einsetzen kann, die außerhalb des oben angegebenen Bereichs für die Initiatormengen liegen. Wässrige Dispersionen von hochmolekularen Homo- und Copolymerisaten der in Betracht kommenden N-Vinylcarbonsäureamide können auch dadurch erhalten werden, dass man die Polymerisation in Gegenwart von Vernetzern durchführt. Als Vernetzer kommen beispielsweise Verbindungen mit mehr als einer polymerisierbaren Doppelbindung wie Diallylammoniumchlorid, Ethylenglykoldimethacrylat, Diethylenglykoldiacrylat, Allylmethacrylat, Trimethylolpropantriacrylat, Triallylamin, Tetraallyloxyethan, Triallylcyanurat, Maleinsäurediallylester, Tetraallylethylendiamin, Divinylidenharnstoff, Pentaerythritdi-, Pentaerythrittri- und Pentaerythrittetraallylether, N,N'-Methylenbisacrylamid oder N,N'-Methylenbismethacrylamid in Betracht.

Die Molekulargewichte der in den Dispersionen vorliegenden wasserlöslichen Polymere von N-Vinylcarbonsäureamiden können mit Hilfe der K-Werte nach Fikentscher charakterisiert werden. Die K-Werte betragen bis zu 400 und liegen vorzugsweise in dem Bereich von 130 bis 220. Aus Lichtstreuexperimenten folgt, daß ein K-Wert von 250 einem mittleren Molekulargewicht der Polymere von etwa 7 000 000 Dalton entspricht.

Erfindungsgemäß können die wasserlöslichen Polymere von N-Vinylcarbonsäureamiden zu Vinylamineinheiten enthaltenden Polymeren hydrolysiert werden. So entstehen beispielsweise durch Abspaltung von Formylgruppen aus N-Vinylformamideinheiten enthaltenden Polymeren und durch Abspaltung der Gruppe CH₃-CO- aus N-Vinylacetamideinheiten enthaltenden Polymeren jeweils Vinylamin-Einheiten enthaltende Polymere. Die Abspaltung kann partiell oder vollständig durchgeführt werden. Beispielsweise beträgt der Hydrolysegrad der N-vinylcarbonsäureamide 1 - 100 mol-%, bezogen auf die Anzahl der Carbonsäureamideinheiten, bevorzugt 20 - 90 mol-%, besonders bevorzugt 40 - 85 mol-% und insbesondere bevorzugt 60 - 80 mol-%. Sofern die Hydrolyse in Gegenwart von Säuren vorgenommen wird, liegen die Vinylamin-Einheiten der gebildeten Polymere als Ammoniumsalze vor. Die Hydrolyse kann jedoch auch mit Hilfe von Basen vorgenommen werden, z.B. von Metallhydroxiden, insbesondere von Alkalimetall- und Erdalkalimetallhydroxiden. Vorzugsweise verwendet man Natriumhydroxid oder Kaliumhydroxid. In besonderen Fällen kann die Hydrolyse auch mit Hilfe von Ammoniak oder Aminen durchgeführt werden. Bei der Hydrolyse in Gegenwart von Basen liegen die Vinylamin-Einheiten in Form der freien Basen vor.

Als Hydrolysemittel eignen sich vorzugsweise Mineralsäuren, wie Halogenwasserstoffe, die gasförmig oder als wässrige Lösung eingesetzt werden können. Vorzugsweise verwendet man konzentrierte Salzsäure, Schwefelsäure, Salpetersäure oder Phosphorsäure sowie organische Säuren, wie C₁- bis C₅-Carbonsäuren, sowie aliphatische oder aromatische Sulfonsäuren. Beispielsweise benötigt man pro Formylgruppenäquivalent in den N-Vinylformamideinheiten einpolymerisiert enthaltenden Polymeren 0,05 bis 2, insbesondere 1 bis 1,5 Moläquivalente einer Säure. Die Hydrolyse der N-Vinylformamid-Einheiten verläuft bedeutend schneller als die der N-VinylacetamidEinheiten aufweisenden Polymere. Sofern man Copolymere der in Betracht kommenden N-Vinylcarbonsäureamide mit anderen Comonomeren der Hydrolyse unterwirft, so können auch die im Copolymer enthaltenen Comonomer-Einheiten chemisch verändert werden. So entstehen beispielsweise aus Vinylacetat-Einheiten Vinylalkohol-Einheiten. Aus Acrylsäuremethylester-Einheiten entstehen bei der Hydrolyse Acrylsäure-Einheiten und aus Acrylnitril-Einheiten werden Acrylamid- bzw. Acrylsäure-Einheiten gebildet. Die Hydrolyse der N-Vinylformamid- und/oder VinylacetamidEinheiten der wasserlöslichen Polymere kann zu 3 bis 100, vorzugsweise 5 bis 40 % durchgeführt werden. Die wässrigen Dispersionen der wasserlöslichen Polymere von N-Vinylcarbonsäureamiden werden bei der Hydrolyse überraschenderweise nicht zerstört.

Die erfindungsgemäßen wässrigen Dispersionen der wasserlöslichen Polymere von N-Vinylcarbonsäureamiden bilden beim Verdünnen mit Wasser klare wässrige Polymerlösungen. Die Viskosität der Dispersionen beträgt beispielsweise 300 bis 50 000 mPa·s, vorzugsweise 400 bis 10 000 mPa·s (bestimmt in einem Brookfield-Viskosimeter bei 20°C, Spindel Nr. 4 und 20 UpM). Die mittlere Teilchengröße in den Dispersionen der wasserlöslichen Polymere von N-Vinylcarbonsäureamiden liegt meistens im Bereich von 0,1 bis 50 µm.

Die erfindungsgemäßen wässrigen Dispersionen, welche sowohl nicht hydrolysierte als auch hydrolysierte wasserlösliche Polymere von N-Vinylcarbonsäureamiden enthalten können, werden als Entwässerungs-, Flockungs- und Retentionsmittel sowie als Nass- und Trockenfestigkeitsmittel und als Fixiermittel bei der Herstellung von Papier verwendet. Die nicht hydrolysierten wie auch die hydrolysierten wässrigen Dispersionen sind außerdem als Verfestigungsmittel für Papier, als Fixiermittel für lösliche und unlöslichen Störstoffe bei der Papierherstellung und als Mittel für die Papierstreicherei einsetzbar.

### Beispiele

Die K-Werte wurden nach H. Fikentscher, Cellulose-Chemie, Band 13, 58-64 und 71-74 (1932) als 0,1 %ige Lösung in 5 %iger Natriumchloridlösung bei 25°C bestimmt.

Die Viskosität der Dispersionen wurde jeweils in einem Brookfield-Viskosimeter mit einer Spindel Nr. 4 bei 20 UpM und einer Temperatur von 20°C gemessen.

Die Angaben in % sind Gewichtsprozent.

Der Hydrolysegrad wurde durch Polyelektrolyttitration (PET) nach D. Horn, Progr. Colloid & Polymer Sci. 65, 251-264 (1978) bestimmt.

Die Teilchengröße wurde lichtmikroskopisch durch Mittelung der grob gemessenen Durchmesser von ca. 50 Einzelteilchen bestimmt.

### Beispiel 1 (Makromonomer 1)

1540 g Monomethylpolyethylenglykol (mittlere Molmasse: 1000), 353 g Methacrylsäure, 148 g Acrylsäure, 20 g p-Toluolsulfonsäure, 1 g Phenothiazin und 453 g Toluol wurden so lange am Rückfluss unter Stickstoffeinleitung erhitzt, bis kein Wasser mehr entstand und die Säurezahl konstant war.

### Beispiel 2 (Makromonomer 2)

357 g Monomethylpolyethylenglykol (mittlere Molmasse: 1000), 126 g Methacrylsäure, 12 g p-Toluolsulfonsäure, 0,1 g Phenothiazin und 1,43 g Hypophosphorige Säure (50%ig) wurden 1 Std. bei 80°C und dann mehrere Std. bei 120°C gerührt, bis die Säurezahl konstant war.

### Beispiel 3 (Stabilisator 1)

340 g destilliertes Wasser wurden unter Inertgasatmosphäre auf Rückflusstemperatur erhitzt und dazu parallel über 5 Stunden 380 g der Makromonomerlösung aus Bsp. 1, über 5 Stunden und 15 Minuten eine Lösung aus 25 g Wasser und 4,7 g Natriumperoxodisulfat und ebenfalls über 5 Stunden und 15 Minuten 35 g einer 36 %igen Natriumbisulfit-Lösung zudosiert. Anschließend wurde noch eine weitere Stunde am Rückfluss erhitzt. Während der gesamten Reaktionszeit wurde kontinuierlich Toluol entfernt. Nach Abkühlen auf Raumtemperatur wurde mit 46 g Natronlauge (50 %ig) auf pH 6,9 neutralisiert. Man erhielt eine Polymerlösung mit einem K-Wert (1% in Wasser) von 30,9 und einem Feststoffgehalt von 46 %.

### Beispiel 4 (Stabilisator 2)

280 g destilliertes Wasser wurden unter Inertgasatmosphäre auf Rückflusstemperatur erhitzt und dazu parallel über 5 Stunden 250 g Makromonomerlösung aus Bsp. 2, gemischt mit 50 g Wasser, über 5 Stunden und 15 Minuten eine Lösung aus 22 g Wasser und 3,6 g Natriumperoxodisulfat und ebenfalls über 5 Stunden und 15 Minuten eine Lösung aus 9 g Natriumhypophosphit in 11 g Wasser zudosiert. Anschließend wurde noch eine weitere Stunde am Rückfluss erhitzt. Während der gesamten Reaktionszeit wurde kontinuierlich Toluol entfernt. Nach Abkühlen auf Raumtemperatur wurde mit 39 g Natronlauge (50 %ig) auf pH 6,7 neutralisiert. Man erhält eine Polymerlösung mit einem K-Wert (1% in Wasser) von 38,8 und einem Feststoffgehalt von 29.7 %.
Die so hergestellte Polymerlösung wurde anschließend zur Entsalzung dialysiert. Dazu wurden 100 g der Polymerlösung in einen Dialyseschlauch ("Por Biotech Cellulose Ester(CE) Dialysis Membrane", MWCO 500, Durchmesser 20) der Fa. Medicell International Ltd., 239 Liverpool Road, London N1 1 LX, UK, eingefüllt, dieser verschlossen und vier Tage in 10 Liter destilliertem Wasser dialysiert. Das destillierte Wasser wurde zweimal pro Tag gewechselt. Anschließend wurde der Inhalt des Dialyseschlauchs mittels eines Rotationsverdampfers wieder auf einen Feststoffgehalt von 27,2% aufkonzentriert.

### Beispiel 5

488 g destilliertes Wasser, 200 g Polyethylenglykol (mittlere Molmasse: 1500), 58,4 g Stabilisatorlösung aus Bsp. 3 und 2,5 g Natriumdihydrogenphospat wurden bei 60°C gelöst und anschließend Stickstoff durch die Lösung geleitet. Dann wurden 250 g N-Vinylformamid (Reinheit >98%) zugegeben und der pH-Wert auf 6,75 eingestellt. Anschließend wurden 1,25 g 2,2'-Azobis(2-methylpropionamidine)dihydrochlorid zugeben und die Innentemperatur unter kontinuierlicher Stickstoffdurchleitung auf 60°C gehalten, bis die Reaktion abgeklungen war. Man erhielt eine milchig weiße Dispersion mit einer Viskosität von 600 mPa·s, einer Teilchengröße von ca. 1 µm und einem K-Wert von 160.

### Beispiel 6

Wie Beispiel 5, nur wurden 175 g Polyethylenglykol (mittlere Molmasse: 1500), 454 g destilliertes Wasser und 117 g Stabilisatorlösung aus Bsp. 3 eingesetzt.
Man erhielt eine milchig weiße Dispersion mit einer Viskosität von 750 mpa·s, einer Teilchengröße von ca. 1 µm und einem K-Wert von 142.

### Beispiel 7

Wie Beispiel 5, nur wurde Polyethylenglykol durch 200 g Monomethylpolyethylenglykol (mittlere Molmasse: 700) ersetzt.
Man erhielt eine milchig weiße Dispersion mit einer Viskosität von 500 mPa·s, einer Teilchengröße von ca. 1 µm und einem K-Wert von 167.

### Beispiel 8a: Polymerisation

400 g Polyethylenglykol (mittlere Molmasse: 1500), 5 g Natriumdihydrogenphosphat, 131 g Stabilisatorlösung aus Bsp. 3 und 927 g VE-Wasser wurden unter Rühren auf 55°C erwärmt. Mit Phosphorsäure (75%) stellte man den pH-Wert auf 6,75 ein und inertisierte die Mischung durch einen kontinuierlichen Stickstoffstrom. Dann wurden 30 g einer 8%igen V50-( 2,2-Azobis(2-amidionpropan)dihydrochlorid)-Lösung in 12 Minuten und 100 g N-Vinylformamid in weiteren 12 Minuten nacheinander zudosiert. Nach Ende des Zulaufs des N-Vinylformamids wurden weitere 400 g N-Vinylformamid in 4 Stunden zudosiert. Die Innentemperatur wurde bis zum Abklingen der Reaktion bei 55°C gehalten. Nach dem Ende der Reaktion wurde unter Zugabe von 7,5g 8%iger V50-( 2,2-Azobis(2-amidionpropan)dihydrochlorid)-Lösung 2 Stunden lang bei 60°C nachpolymerisiert. Man erhielt eine weiße Dispersion mit einer Viskosität von 830 mPa·s, einem K-Wert von 157,5 und einer Teilchengröße von ca. 1µm.

### Beispiel 8b: Hydrolyse

1000 g der in der Polymerisation unter Bsp. 8a hergestellten Dispersion wurden bei 60°C unter Rühren mit 21 g Schwefelsäure (96%) innerhalb von 2 Stunden versetzt. Anschließend wurde die Mischung 5 Stunden lang bei 60°C gerührt.
Man erhielt eine weiße Dispersion mit einer Viskosität von 1200 mPa·s, einem Hydrolysegrad von 7,4%, einem Polymergehalt von 23,8%.

### Beispiel 9

476 g destilliertes Wasser, 200 g Polyethylenglykol (mittlere Molmasse: 1500), 70 g Stabilisatorlösung aus Bsp. 3 und 3,5 g Natriumdihydrogenphospat wurden unter Rühren gemischt, auf 60°C temperiert und Stickstoff zur Inertisierung durch die Lösung geleitet. Dann wurden 300 g N-Vinylformamid (Reinheit >98%) zugegeben und der pH-Wert auf 6,75 eingestellt. Anschließend gab man 1,5 g 2,2'-Azobis(2-methylpropionamidine)dihydrochlorid zu und hielt die Innentemperatur unter kontinuierlicher Stickstoffdurchleitung auf 60°C, bis die Reaktion abgeklungen war. Man erhielt eine milchig weiße Dispersion mit einer Viskosität von 1950 mPa·s, einer Teilchengröße von ca. 1 µm und einem K-Wert von 158.

### Beispiel 10a: Polymerisation

200 g Polyethylenglykol (mittlere Molmasse: 1500), 2,5 g Natriumdihydrogenphosphat, 250 g N-Vinylformamid, 92 g Stabilisatorlösung aus Bsp. 4 und 451 g VE-Wasser wurden unter Rühren gemischt und der pH-Wert mit Phosphorsäure (75%) auf 6,75 eingestellt. Die Reaktionsmischung wurde auf 60°C temperiert und durch einen kontinuierlichen Stickstoffstrom von Sauerstoff befreit. Nach der Zugabe von 1,25 g V50-(2,2-Azobis(2-amidionpropan)dihydrochlorid) wurde die Innentemperatur bis zum Abklingen der Reaktion bei 60°C gehalten.
Man erhielt eine weiße Dispersion mit einer Viskosität von 1200 mPa·s, einem K-Wert von 165 und einer Teilchengröße von ca. 1 µm.

### Beispiel 10b: Hydrolyse

781 g der in der Polymerisation unter Bsp. 10a hergestellten Dispersion wurden bei 60°C unter Rühren mit 41 g Schwefelsäure (96%) innerhalb 1 Stunde und 30 Minuten versetzt und anschließend 5 Stunden lang bei 60°C gerührt.
Man erhielt eine weiße Dispersion mit einer Viskosität von 800 mPa·s und einem Hydrolysegrad von 15%.

### Beispiel 11 a: Polymerisation

200 g eines alkylmodifizierten statistischen Polypropylenglykol-Polyethylenglykol-Mischpolymerisates (Mw ca. 2000, Hydroxylzahl ca. 30), 2,5 g Natriumdihydrogenphosphat, 250 g N-Vinylformamid, 245 g Stabilisatorlösung aus Bsp. 4, verdünnt auf einen Feststoffgehalt von 10,2 Gew.-%, und 300 g VE-Wasser wurden unter Rühren gemischt und der pH-Wert mit Phosphorsäure (75%) auf 6,75 eingestellt. Die Reaktionsmischung wurde auf 60°C temperiert und durch einen kontinuierlichen Stickstoffstrom von Sauerstoff befreit. Nach der Zugabe von 1,25 g V50-(2,2-Azobis(2-amidionpropan)dihydrochlorid) wurde die Innentemperatur bis zum Abklingen der Reaktion bei 60°C gehalten. Man erhielt eine weiße Dispersion mit einer Viskosität von 900 mPa·s, einem K-Wert von 149 und einer Teilchengröße von ca. 1 µm.

### Beispiel 11 b: Hydrolyse

782 g der in der Polymerisation unter Beispiel 11a hergestellten Dispersion wurden unter Rühren bei 60°C mit 41 g Schwefelsäure (96%) innerhalb 1 Stunde und 30 Minuten versetzt und anschließend 5 Stunden lang bei 60°C gerührt. Man erhielt eine weiße Dispersion mit einer Viskosität von 700 mPa·s und einem Hydrolysegrad von 15%.

### Beispiel 12a: Polymerisation

180 g Polyethylenglykol (Mw ca. 1500), 3,0 g Phosphorsäure (75%), 44,6 g Stabilisatorlösung aus Bsp. 4, und 567 g VE-Wasser wurden unter Rühren gemischt und der pH-Wert mit Natronlauge (25%) auf 6,75 eingestellt. Anschließend wurden 120 g N-Vinylformamid und 80 g N-Vinylpyrrolidon hinzugegeben. Die Reaktionsmischung wurde auf 55°C temperiert und durch einen kontinuierlichen Stickstoffstrom von Sauerstoff befreit. Nach der Zugabe von 1,20 g V50-(2,2-Azobis(2-amidionpropan)dihydrochlorid) wurde die Innentemperatur bis zum Abklingen der Reaktion bei 55°C gehalten. Man erhielt eine weiße Dispersion mit einer Viskosität von 584 mPa·s, einem K-Wert von 130 und einer Teilchengröße von ca. 3 µm.

### Beispiel 12b: Hydrolyse

200 g der in der Polymerisation unter Beispiel 12a hergestellten Dispersion wurden unter Rühren bei 60°C mit 32 g Salzsäure (38%) innerhalb 4 Stunden versetzt und anschließend 2 Stunden lang bei 60°C gerührt. Man erhielt eine weiße Dispersion mit einer Viskosität von 160 mPa·s und einem Hydrolysegrad von 68% (bezogen auf den VFA-Gehalt des Polymeren) und einer Teilchengröße von ca. 3 µm.

### Beispiel 12c: Verdickung

Es wurde eine auf 4 % verdünnte Dispersion des in Beispiel 12b hergestellten Polymeren auf pH 5,3 eingestellt, so dass die Lösung eine Viskosität von 5150 mPa·s aufwies. Bei einer Erhöhung des pH-Wertes auf 6 besaß die Lösung eine Viskosität von 19.000 mPa·s (nach einiger Zeit erhöhte sich die Viskosität auf 76.000 mPa·s). Eine auf 6 % verdünnte Dispersion wies bereits bei pH 5,6 eine Viskosität von 168.000 mPa·s auf (nach einiger Zeit Erhöhung auf 664.000 mPa·s).

### Beispiel 12d: Hydrolyse

202 g der in der Polymerisation unter Beispiel 12a hergestellten Dispersion wurden unter Rühren bei 60°C mit 16 g Salzsäure (38%) innerhalb 2 Stunden versetzt und anschließend 4 Stunden lang bei 60°C gerührt. Man erhielt eine weiße Dispersion mit einer Viskosität von 216 mPa·s und einem Hydrolysegrad von 39 % (bezogen auf den VFA-Gehalt des Polymeren) und einer Teilchengröße von ca. 4 µm.

### Beispiel 12e: Verdickung

Es wurde eine auf 4 % verdünnte Dispersion des in Beispiel 12d hergestellten Polymeren auf pH 6,2 eingestellt, so dass die Lösung eine Viskosität von 824 mPa·s aufwies. Bei einer Erhöhung des pH-Wertes auf 7,3 besaß die Lösung eine Viskosität von 27.000 mPa·s.

### Beispiel 12f: Hydrolyse

200 g der in der Polymerisation unter Beispiel 12a hergestellten Dispersion wurden unter Rühren bei 60°C mit 8 g Salzsäure (38%) innerhalb 1 Stunde versetzt und anschließend 5 Stunden lang bei 60°C gerührt. Man erhielt eine weiße Dispersion mit einer Viskosität von 280 mPa·s und einem Hydrolysegrad von 21 % (bezogen auf den VFA-Gehalt des Polymeren) und einer Teilchengröße von ca. 3 µm.

### Beispiel 12g: Verdickung

Es wurde eine auf 4 % verdünnte Dispersion des in Beispiel 12f hergestellten Polymeren auf pH 7,3 eingestellt, so dass die Lösung eine Viskosität von 644 mPa·s aufwies. Bei einer Erhöhung des pH-Wertes auf 8 besaß die Lösung eine Viskosität von 1.380 mPa·s.

## Patentansprüche

1. Wässrige Dispersionen wasserlöslicher Polymere von N-Vinylcarbonsäureamiden, **dadurch gekennzeichnet, dass** die wässrigen Dispersionen im Wesentlichen salzfrei sind und anionische polymere Stabilisatoren mit kammartiger Molekülstruktur enthalten, welche durch Copolymerisation von Makromonomere enthaltenden Monomermischungen erhältlich sind.

2. Wässrige Dispersionen nach Anspruch 1, **dadurch gekennzeichnet, dass** die wasserlöslichen Polymere Einheiten von N-Vinylformamid, N-Vinylacetamid, N-Methyl-N-vinylformamid und/oder N-Methyl-N-vinylacetamid enthalten.

3. Wässrige Dispersionen nach einem der Ansprüche 1 oder 2, **dadurch gekennzeichnet, dass** 100 Gewichtsteile der Dispersion (i) 5 bis 50 Gewichtsteile wasserlösliche Polymere von N-Vinylcarbonsäureamiden und (ii) 1 bis 30 Gewichtsteile mindestens eines Stabilisators mit kammartiger Molekülstruktur sowie 94 bis 20 Gewichtsteile Wasser enthalten.

4. Wässrige Dispersionen nach einem der Ansprüche 1 bis 3, **dadurch gekennzeichnet, dass** die Viskosität der Dispersionen 300 bis 50 000 mPa s beträgt.

5. Wässrige Dispersionen nach einem der Ansprüche 1 bis 4, **dadurch gekennzeichnet, dass** die enthaltenen Polymerteilchen eine mittlere Teilchengröße von 0,1 bis 50 µm haben.

6. Wässrige Dispersionen nach einem der Ansprüche 1 bis 5, **dadurch gekennzeichnet, dass** die Makromonomere ausgewählt sind aus der Gruppe der Vinylether, Allylether, Allylamine, Allylester, (Meth)Acrylester und (Meth)Acrylamide.

7. Wässrige Dispersionen, erhältlich durch partielle oder vollständige Hydrolyse der in den wässrigen Dispersionen nach einem der Ansprüche 1 bis 6 enthaltenen wasserlöslichen Polymere von N-Vinylcarbonsäureamiden zu Vinylamineinheiten enthaltenden Polymeren, wobei die Dispersion intakt bleibt.

8. Verfahren zur Herstellung wässriger Dispersionen wasserlöslicher Polymere von N-Vinylcarbonsäureamiden, **dadurch gekennzeichnet, dass** mindestens ein N-Vinylcarbonsäureamid in wässrigem Medium in Gegenwart von mindestens einem anionischen polymeren Stabilisator mit kammartiger Molekülstruktur, wobei man den oder die Stabilisatoren durch Copolymerisation von Makromonomere enthaltenden Monomermischungen erhalten hat, polymerisiert wird.

9. Verfahren nach Anspruch 8, **dadurch gekennzeichnet, dass** die wasserlöslichen Polymere Einheiten von N-Vinylformamid, N-Vinylacetamid, N-Methyl-N-vinylformamid und/oder N-Methyl-N-vinylacetamid enthalten.

10. Verfahren nach einem der Ansprüche 8 oder 9, **dadurch gekennzeichnet, dass** das mindestens eine N-Vinylcarbonsäureamid zusammen mit mindestens einem Comonomeren polymerisiert wird.

11. Verfahren zur Herstellung wässriger Dispersionen, **dadurch gekennzeichnet, dass** man eine nach einem Verfahren gemäß den Ansprüchen 8 bis 10 hergestellte wässrige Dispersion wasserlöslicher Polymere von N-Vinylcarbonsäureamiden durch partielle oder vollständige Hydrolyse in eine wässrige Dispersion Vinylamineinheiten enthaltender Polymere überführt, wobei die Dispersion intakt bleibt.

12. Verwendung der wässrige Dispersionen nach einem der Ansprüche 1 bis 10 als als Entwässerungs-, Flockungs- und Retentionsmittel, als Nass- und Trockenfestigkeitsmittel, als Fixiermittel bei der Herstellung von Papier und als Mittel für die Papierstreicherei, und als Verdicker.

## Claims

1. An aqueous dispersion of water-soluble polymers of N-vinylcarboxamides, wherein the aqueous dispersion is substantially salt-free and comprises anionic polymeric stabilizers having a comb-like molecular structure which are obtainable by copolymerization of monomer mixtures comprising macromonomers.

2. The aqueous dispersion according to claim 1, wherein the water-soluble polymers comprise units of N-vinylformamide, N-vinylacetamide, N-methyl-N-vinylformamide and/or N-methyl-N-vinylacetamide.

3. The aqueous dispersion according to either of claims 1 and 2, wherein 100 parts by weight of the dispersion comprise (i) from 5 to 50 parts by weight of water-soluble polymers of N-vinylcarboxamides and (ii) from 1 to 30 parts by weight of at least one stabilizer having a comb-like molecular structure and from 94 to 20 parts by weight of water.

4. The aqueous dispersion according to any of claims 1 to 3, wherein the viscosity of the dispersion is from 300 to 50 000 mPa.s.

5. The aqueous dispersion according to any of claims 1 to 4, wherein the polymer particles present have a mean particle size of from 0.1 to 50 µm.

6. The aqueous dispersion according to any of claims 1 to 5, wherein the macromonomers are selected from the group consisting of the vinyl ethers, allyl ethers, allylamines, allyl esters, (meth)acrylates and (meth)acrylamides.

7. The aqueous dispersion, obtainable by partial or complete hydrolysis of the water-soluble polymers of N-vinylcarboxamides present in the aqueous dispersion according to any of claims 1 to 6 to give polymers comprising vinylamine units, the dispersion remaining intact.

8. A process for the preparation of aqueous dispersions of water-soluble polymers of N-vinylcarboxamides, wherein at least one N-vinylcarboxamide is polymerized in an aqueous medium in the presence of at least one anionic polymeric stabilizer having a comb-like molecular structure, the stabilizer or the stabilizers being obtained by copolymerization of monomer mixtures comprising macromonomers.

9. The process according to claim 8, wherein the water-soluble polymers comprise units of N-vinylformamide, N-vinylacetamide, N-methyl-N-vinylformamide and/or N-methyl-N-vinylacetamide.

10. The process according to either of claims 8 and 9, wherein the at least one N-vinylcarboxamide is polymerized together with at least one comonomer.

11. A process for the preparation of aqueous dispersions, wherein an aqueous dispersion of water-soluble polymers of N-vinylcarboxamides, which dispersion is prepared by a process according to any of claims 8 to 10, is converted into an aqueous dispersion of polymers comprising vinylamine units by partial or complete hydrolysis, the dispersion remaining intact.

12. The use of the aqueous dispersions according to any of claims 1 to 10 as drainage aids, flocculants and retention aids, as wet and dry strength agents, as fixing agents in papermaking and as papercoating compositions, and as thickeners.

## Revendications

1. Dispersions aqueuses de polymères hydrosolubles de N-vinylcarboxamides, **caractérisées en ce que** les dispersions aqueuses sont pratiquement exemptes de sels et contiennent des stabilisants polymères anioniques à structure de molécule en peigne, qui peuvent être obtenus par copolymérisation de mélanges de monomères contenant des macromonomères.

2. Dispersions aqueuses selon la revendication 1, **caractérisées en ce que** les polymères hydrosolubles contiennent des motifs de N-vinylformamide, N-vinylacétamide, N-méthyl-N-vinylformamide et/ou N-méthyl-N-vinylacétamide.

3. Dispersions aqueuses selon la revendication 1 ou 2, **caractérisées en ce que** 100 parties en poids de la dispersion contiennent (i) 5 à 50 parties en poids de polymères hydrosolubles de N-vinylcarboxamides et (ii) 1 à 30 parties en poids d'au moins un stabilisant à structure de molécule en peigne ainsi que 94 à 20 parties en poids d'eau.

4. Dispersions aqueuses selon l'une quelconque des revendications 1 à 3, **caractérisées en ce que** la viscosité des dispersions vaut de 300 à 50 000 mPa.s.

5. Dispersions aqueuses selon l'une quelconque des revendications 1 à 4, **caractérisées en ce que** les particules de polymères contenues ont une taille moyenne de particule de 0,1 à 50 µm.

6. Dispersions aqueuses selon l'une quelconque des revendications 1 à 5, **caractérisées en ce que** les macromonomères sont choisis dans le groupe des éthers vinyliques, éthers allyliques, allylamines esters allyliques, esters (méth)acryliques et (méth)acrylamides.

7. Dispersions aqueuses, pouvant être obtenues par hydrolyse partielle ou totale des polymères hydrosolubles de N-vinylcarboxamides contenus dans les dispersions aqueuses selon l'une quelconque des revendications 1 à 6, en polymères contenant des motifs vinylamine, la dispersion restant intacte.

8. Procédé pour la préparation de dispersions aqueuses de polymères hydrosolubles de N-vinylcarboxamides, **caractérisé en ce qu'**on polymérise au moins un N-vinylcarboxamide en milieu aqueux, en présence d'au moins un stabilisant polymère anionique à structure de molécule en peigne, le ou les stabilisants étant obtenus par copolymérisation de mélanges de monomères contenant des macromonomères.

9. Procédé selon la revendication 8, **caractérisé en ce que** les polymères hydrosolubles contiennent des motifs de N-vinylformamide, N-vinylacétamide, N-méthyl-N-vinylformamide et/ou N-méthyl-N-vinylacétamide.

10. Procédé selon la revendication 8 ou 9, **caractérisé en ce que** ledit au moins un N-vinylcarboxamide est polymérisé conjointement avec au moins un comonomère.

11. Procédé pour la préparation de dispersions aqueuses, **caractérisé en ce qu'**on convertit par hydrolyse partielle ou totale une dispersion aqueuse de polymères hydrosolubles de N-vinylcarboxamides, préparée conformément à une procédé selon les revendications 8 à 10, en une dispersion aqueuse de polymères contenant des motifs vinylamine, la dispersion restant intacte.

12. Utilisation des dispersions aqueuses selon l'une quelconque des revendications 1 à 10, en tant que déshydratants, floculants et agents de rétention, en tant qu'agents de résistance à l'humidité et à la sécheresse, en tant que fixateurs dans la fabrication du papier et comme agents pour le couchage du papier, et en tant qu'épaississants.
